**Europäisches Patentamt**

**European Patent Office**

**Office européen des brevets**

(19)

(11) Numéro de publication : **0 401 091 B1**

(12) **FASCICULE DE BREVET EUROPEEN**

(45) Date de publication du fascicule du brevet :
**15.07.92 Bulletin 92/29**

(21) Numéro de dépôt : **90401384.4**

(22) Date de dépôt : **23.05.90**

(51) Int. Cl.⁵ : **B29C 33/00, B29C 45/14,**
**B29C 45/26**

(54) **Surmoulage sur vitre d'un joint ou élément d'encadrement.**

(30) Priorité : **02.06.89 FR 8907700**

(43) Date de publication de la demande :
**05.12.90 Bulletin 90/49**

(45) Mention de la délivrance du brevet :
**15.07.92 Bulletin 92/29**

(84) Etats contractants désignés :
**DE GB IT**

(56) Documents cités :
**WO-A-87/04973**
**DE-A- 3 020 906**
**DE-A- 3 532 424**
**FR-A- 2 157 189**
**US-A- 4 044 984**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Pinson, Jean Claude**
**5, avenue du Chemin Vert, Pont-Péan**
**F-35230 Saint Erblon (FR)**

(74) Mandataire : **Boivin, Claude**
**9, rue Edouard-Charton**
**F-78000 Versailles (FR)**

Jouve, 18, rue Saint-Denis, 75001 PARIS

EP 0 401 091 B1

## Description

La présente invention a pour objet un dispositif pour surmouler un joint ou un élément d'encadrement sur le chant d'une vitre galbée, telle qu'un pare-brise de véhicule automobile.

Un dispositif de ce genre est décrit dans le brevet français FR-A-2 572 987. Ce dispositif comporte deux formes moulantes en matière élastique et des moyens pour exercer une pression hydraulique sur des formes moulantes. Mais, dans ce dispositif connu, la section du joint est variable et fonction de la position du chant de la vitre par rapport au moule.

La présente invention a pour objet un dispositif de surmoulage selon la revendication 1, avec lequel le joint formé présente une section constante sur l'ensemble de la périphérie de la vitre.

Ce dispositif est caractérisé en ce qu'il comprend une série de secteurs de poussée disposés à la périphérie des formes moulantes sur lesquels est exercée la pression hydraulique et qui exercent ainsi cette pression sur les formes moulantes.

On a décrit ci-après, à titre d'exemple non limitatif, un mode de réalisation du dispositif selon l'invention, avec référence aux dessins annexés dans lesquels :

La Figure 1 est une vue en coupe montrant un joint surmoulé sur un pare-brise;

La Figure 2 est une vue en coupe tranversale du dispositif;

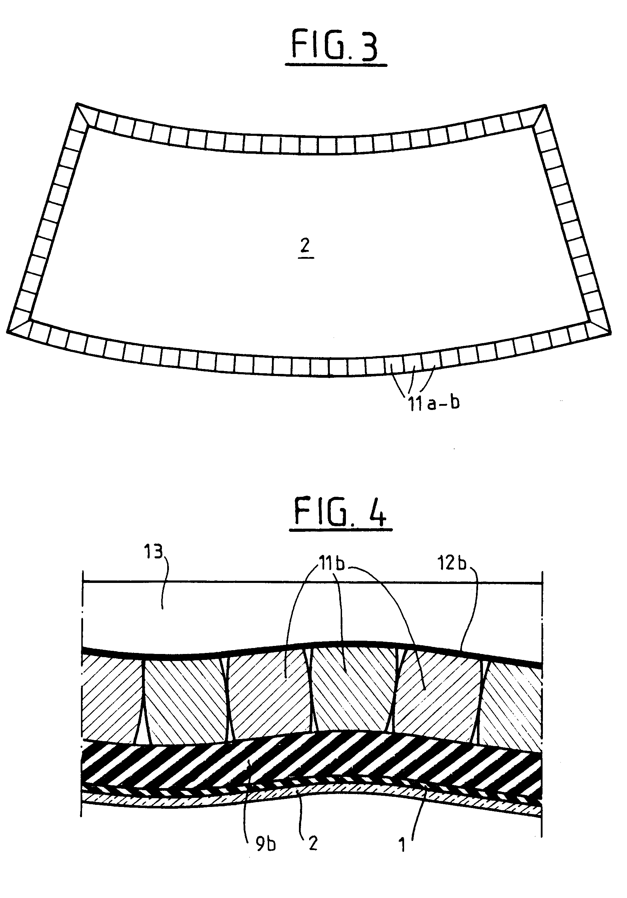

La Figure 3 est une vue en élévation des secteurs de poussée;

La Figure 4 est une vue en coupe suivant IV-IV de la Figure 2.

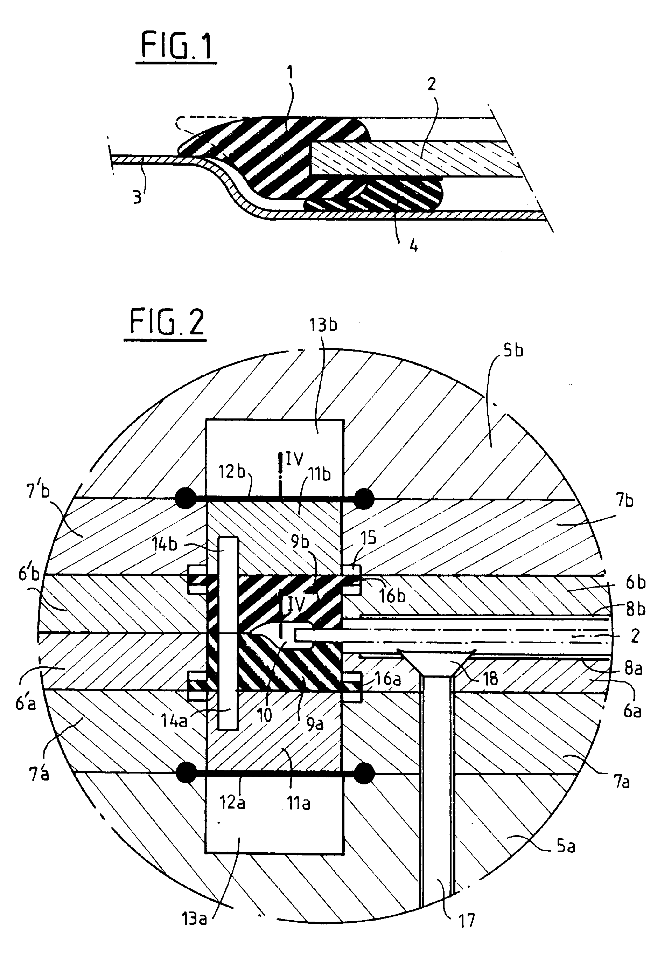

Tel qu'il est représenté aux dessins, le dispositif est destiné à surmouler un joint 1 sur une vitre de pare-brise 2 de véhicule de façon à assurer l'étanchéité de ce dernier avec la tolerie 3 du véhicule (Figure 1) en coopération avec un cordon d'adhérisation 4 qui absorbe les variations de cote de la vitre.

Ce dispositif comprend une carcasse inférieure 5a et une carcasse supérieure 5b. Sur chacune de ces carcasses sont fixées par des vis non représentées une plaque de retenue en deux parties 6a-6'a ou 6b-6'b et une plaque de guidage également en deux parties 7a-7'a ou 7b-7'b. Les parties centrales 6a-6b des plaques de retenue sont écartées l'une de l'autre et présentent chacune un évidement 8a ou 8b faisant face à la vitre 2. Les parties centrales 6a-6b sont écartées des parties périphériques 6'a-6'b par des espaces dans lesquels sont disposées des formes moulantes 9a et 9b qui s'étendent sur toute la périphérie du moule. Les parties en regard de ces formes moulantes comportent chacune en évidement délimitant une empreinte 10 à la forme du joint 1.

De même, les parties centrales 7a-7b des plaques de guidage sont écartées des parties périphériques 7'a-7'b par des espaces dans lesquels sont disposées deux séries de secteurs de poussée 11a et 11b en métal. Les secteurs de poussée de chacune des séries sont au contact d'une membrane annulaire d'appui 12a ou 12b fermant une chambre 13a ou 13b qui peuvent être reliées à une même source de fluide sous pression. Chacun des secteurs de poussée 11a et 11b est solidaire d'un pion 14a ou 14b qui traverse la forme moulante adjacente 9a ou 9b; chaque pion 14a d'un secteur 11a prend appui, lorsque le dispositif est fermé, sur le pion 14b du secteur 11b disposé en vis à vis de façon à limiter l'écrasement des formes moulantes 9a et 9b.

Les parties centrales 6a-6b et 7a-7b des plaques de guidage et de retenue présentent à proximité des formes moulantes 9a et 9b des évidements tels que 15 dans lesquels peuvent évoluer des collerettes 16a et 16b de ces formes moulantes.

Le dispositif est ainsi formé de deux moitiés de moule disposées de part et d'autre de l'empreinte 10 et qu'on peut mettre entre les plateaux d'une presse.

Enfin, une tige ou plusieurs tiges 17 sont montées coulissantes dans la moitié inférieure du dispositif, comprenant la carcasse 5a, la plaque de guidage 7a et la plaque de retenue 6a, et portent chacune à son extrémité une ventouse 18.

Le dispositif qui vient d'être décrit fonctionne de la manière suivante.

Au début du fonctionnement, les deux moitiés du dispositif sont écartées l'une de l'autre et les ventouses 18 sont levées. La vitre 2 est alors mise en place sur la ventouse 18 et celle-ci est descendue de façon que la vitre vienne reposer sur la forme moulante inférieure 9a.

Puis le moule est fermé en appui sur les plaques 6'a et 6'b de sorte que la forme moulante supérieure 9b vient au contact de la vitre et un liquide sous pression est envoyé dans les chambres 13a et 13b. Le liquide pousse, par l'intermédiaire des membranes 12a et 12b, les secteurs 11a et 11b sur les formes moulantes 9a et 9b. Les secteurs suivent la déformation de la glace en conservant la section correcte du joint 1. Les pions 14a et 14b évitent l'écrasement des formes moulantes 9a et 9b.

Après injection de la matière plastique devant constituer le joint 1 et le maintien du moule en position de fermeture pendant un temps suffisant pour assurer la polymérisation de la matière, on ouvre le moule, on soulève les ventouses 18 pour décoller la vitre 2 de la moitié de moule inférieure, et on évacue la vitre.

On obtient ainsi une vitre munie à sa périphérie d'un joint 1 de section constante sur toute la périphérie de la vitre, quelle que soit la déformation de celle-ci.

## Revendications

1. Dispositif pour surmouler un joint (1) ou un élément d'encadrement sur le chant d'une vitre galbée (2), comportant deux formes moulantes (9a, 9b) en matière élastique et des moyens pour exercer une pression hydraulique sur ces formes moulantes, caractérisé en ce qu'il comprend une série de secteurs de poussée (11a, 11b) disposés à la périphérie des formes moulantes (9a, 9b) sur lesquels est exercée la pression hydraulique et qui transmettent ainsi cette pression sur les formes moulantes (9a, 9b).

2. Dispositif selon la revendication 1, caractérisé en ce que chaque paire de secteurs de poussée (11a, 11b) disposés en vis-à-vis comporte une paire de limiteurs d'écrasement (14a,14b) en appui l'un sur l'autre lorsque le dispositif est fermé.

3. Dispositif selon la revendication 1 ou 2, caractérisé en ce qu'il comporte une chambre hydraulique périphérique supérieure (13b) et une chambre hydraulique périphérique inférieure (13a) reliées à une même pression hydraulique et transmettant cette pression aux secteurs de poussée (11a,11b) de manière étanche par l'intermédiaire de membranes annulaires élastiques (12a,12b).

4. Dispositif selon l'une des revendications 1 à 3, caractérisé en ce que les plaques de retenue (6a,6′a) et des guides (7a,7′a) et (7b,7′b) sont solidarisées à une demi-carcasse (5a-5b) du moule et servent à guider radialement les formes moulantes (9a,9b) et les secteurs de poussée (11a,11b).

5. Dispositif selon l'une quelconque des revendications précédentes, caractérisé en ce que les formes moulantes (9a,9b) sont montées flottantes et présentent des collerettes (16a,16b) qui peuvent évoluer librement entre des épaulements des plaques de retenue et des guides.

6. Dispositif selon l'une quelconque des revendications précédentes, caractérisé en ce qu'une ou plusieurs tiges (17) munie de ventouses (18) sont montées coulissantes dans la moitié inférieure et permettent la dépose et l'éjection sans contrainte des vitres.

**Patentansprüche**

1. Vorrichtung zum Anformen einer Dichtung (1) oder eines Rahmenelementes an die Kante einer ausgebauchten Fensterscheibe (2) mit zwei Preßformen (9a, 9b) aus elastischem Material und Mitteln zum Ausüben eines hydraulischen Druckes auf diese Preßformen, dadurch gekennzeichnet, daß sie eine Reihe von am Umfang der Preßformen (9a, 9b) angeordneten Drucksegmenten (11a, 11b) aufweist, auf welche der hydraulische Druck ausgeübt wird und die diesen Druck auf die Preßformen (9a, 9b) übertragen.

2. Vorrichtung nach Anspruch 1, dadurch gekennzeichnet, daß jedes Paar von einander gegenüberliegend angeordneten Drucksegmenten (11a, 11b) ein Paar Druckbegrenzer (14a, 14b) trägt, die sich aneinander abstützen, -wenn die Vorrichtung geschlossen ist.

3. Vorrichtung nach Anspruch 1 oder 2, dadurch gekennzeichnet, daß sie eine obere Umfangshydraulikkammer (13b) und eine untere Umfangshydraulikkammer (13a) aufweist, die an den gleichen hydraulischen Druck ange schlossen sind und diesen Druck abgedichtet durch Zwischenschaltung von ringförmigen elastischen Membranen (12a, 12b) auf die Drucksegmente übertragen.

4. Vorrichtung nach einem der Ansprüche 1 bis 3, dadurch gekennzeichnet, daß die Halterungsplatten (6a, 6′a) und Führungsplatten (7a, 7′a) und (7b, 7′b) mit einer Gehäusehälfte (5a-5b) der Form verbunden sind und zur radialen Führung der Preßformen (9a, 9b) und der Drucksegmente (11a, 11b) dienen.

5. Vorrichtung nach einem der vorhergehenden Ansprüche, dadurch gekennzeichnet, daß die Preßformen (9a, 9b) schwimmend gelagert sind und Flansche (16a, 16b) aufweisen, die sich frei zwischen Schultern der Halterungs- und Führungsplatten bewegen können.

6. Vorrichtung nach einem der vorhergehenden Ansprüche, dadurch gekennzeichnet, daß ein oder mehrere mit Saugnäpfen (18) versehene Stangen (17) verschiebbar in der unteren Hälfte angeordnet sind und das Ablegen und Ausstoßen von Fensterscheiben ohne Beanspruchung ermöglichen.

**Claims**

1. Device for moulding a joint (1) or framing element on the edge of a contoured window pane (2) comprising two moulding forms (9a, 9b) made of an elastic material and means for exerting a hydraulic pressure on these moulding forms, wherein it includes a series of thrust sectors (11a, 11b) disposed at the periphery of the moulding forms (9a, 9b), hydraulic pressure being exerted on these sectors and thus transmitted to the moulding forms (9a, 9b).

2. Device according to claim 1, wherein each pair of thurst sectors (11a, 11b) disposed opposite each other comprise a pair of crushing limiters (14a, 14b) in support on each other when the device is closed.

3. Device according to claim 1 or 2, wherein it comprises one upper peripheral hydraulic chamber (13b) and one lower peripheral hydraulic chamber (13a) connected to a given hydraulic pressure and transmitting this pressure to the thrust sectors (11a, 11b) in a sealed way by means of annular elastic membranes (12a, 12b).

4. Device according to any one of claims 1 to 3, wherein the retaining plates (6a, 6′a) and the guide plates (7a, 7′a) and (7b, 7′b) are rendered integral with a half-frame (5a-5b) of the mould and used to radially guide the moulding forms (9a, 9b) and the thrust sectors (11a, 11b).

5. Device according to any one of the preceding claims, wherein the moulding forms (9a, 9b) are mounted floating and have collars (16a, 16b) able to freely evolve between the shoulders of the retaining and guide plates.

6. Device according to any one of the preceding claims, wherein one or several rods (17) provided with suction caps (18) are mounted sliding inside the lower half and allow for the stress-free laying and ejection of the window panes.

## FIG.1

## FIG.2

## FIG. 3

11 a–b

## FIG. 4

13  11b  12b

9b  2  1